# EUROPEAN PATENT SPECIFICATION

(11) **EP 4 119 475 B1**
(45) Date of publication and mention of the grant of the patent: **04.09.2024**
(21) Application number: 22183383.3
(22) Date of filing: 06.07.2022
(51) Int. Cl.: B65H 19/12, B66F 9/075, B65H 19/10, H01M 10/04, H01M 4/04

(54) **SYSTEM FOR REPLACING A REEL OF MATERIAL FOR THE PRODUCTION OF ELECTRICAL ENERGY STORAGE DEVICES AND RELATED METHOD**
SYSTEM ZUM ERSETZEN EINER MATERIALROLLE FÜR DIE HERSTELLUNG VON ELEKTRISCHEN ENERGIESPEICHERVORRICHTUNGEN UND ENTSPRECHENDES VERFAHREN
SYSTÈME DE REMPLACEMENT D'UNE BOBINE DE MATÉRIAU POUR LA FABRICATION DE DISPOSITIFS DE STOCKAGE D'ÉNERGIE ÉLECTRIQUE ET PROCÉDÉ ASSOCIÉ

(30) Priority: 12.07.2021 IT 202100018266
(43) Date of publication of application: 18.01.2023
(73) Proprietor: Manz Italy S.r.l., 40037 Sasso Marconi (BO) (IT)
(72) Inventor: SALE, Massimiliano, 40037 Sasso Marconi (BO) (IT); SESSA, Silvio, 40037 Sasso Marconi (BO) (IT)
(74) Representative: Studio Torta S.p.A.

(56) References cited:
- EP-A1- 2 862 823
- WO-A1-03/006355
- KR-A- 20200 066 018

## Description

### CROSS-REFERENCE TO RELATED APPLICATIONS

This patent application claims priority from Italian patent application no. 102021000018266 filed on July 12, 2021.

### TECHNICAL FIELD

The present invention relates to a system and to a related method for replacing a reel of material, in particular a reel of a strip of electrode or separator, for the production of electrical energy storage devices.

In particular, the present invention is advantageously but not exclusively applied to the production of rechargeable batteries to which the following description will explicitly refer without thereby losing generality, for example planar batteries in metal can or enveloped (commonly called of the pouch type), or cylindrical batteries composed of cylindrical windings (for example of the jelly roll type).

### STATE OF THE ART

Automatic machines for the production of electrical energy storage devices are known, and in particular of rechargeable batteries or of capacitors.

Rechargeable batteries usually comprise two layers of electrode (cathode and anode) and at least two layers of separator arranged staggered with respect to one another according to an alternated electrode-separator-electrode-separator scheme.

Within the production process, such layers are each provided in a strip shape initially wound in a reel.

In the case of cylindrical batteries, it is known to feed by means of respective feeding units of the aforementioned automatic machines the strips of electrode and the strips of separator along different feeding paths which all converge towards a rotating winding core, which is configured to retain and wind (generally about an elongated-shaped support) the strips of electrode and the strips of separator arranged staggered with respect to one another in an alternated manner, so as to form a cylindrical winding.

Subsequently, the cylindrical winding is typically closed by a layer of protective tape and fed to a further unit for forming the battery.

In the case of planar batteries in metal can or enveloped, also known as pouch batteries, the strips of electrode and separator are fed along respective feeding paths for converging all of them towards a rolling unit, inside which they are laminated with respect to one another. If necessary, during the lamination, the aforementioned strips of electrode and separator are arranged between two further protection layers (these too strip-shaped). Such protection layers are configured to protect the strips of electrode and separator inside the rolling unit and are usually removed at the exit from this unit.

Whatever type of rechargeable battery or capacitor is produced, the automatic machines of the aforementioned type generally comprise an aforementioned feeding unit of the strips of separator and electrode, which are initially wound in respective reels each supported by a relative support shaft or spindle.

During the production process, the feeding unit must constantly be provided with full reels of strips of electrode and separator so as to ensure the continuity of the process.

The need is thus known to provide for the change of the exhausted reels with full reels. Typically, the change of each exhausted reel with a full one is carried out manually by an operator.

Generally, the feeding unit is conveniently adapted to support two reels for each strip of material. In particular, the feeding unit comprises a pair of support shafts or spindles for each strip of material to be fed, one of which spindles supports the unwinding reel and the other of which spindles supports a full reel.

In accordance with the foregoing, in order to prevent interruptions in the production, a feeding unit of known type includes a splicing device (commonly known as splicer) configured to automatically join to one another the final flap of the exhausting reel with the initial flap of the full reel, for each pair of spindles (and thus of reels of a given strip of separator or electrode).

To such regard, it is sufficient for the operator to manually arrange the initial flap of the full reel (already on-board the respective support spindle) at the splicer. At this point, the splicing will take place automatically upon the exhaustion of the unwinding reel.

Once the "old" reel is exhausted, the latter is changed (replaced) with another full reel, whose initial flap, when the full reel is already on-board the feeding unit, is unwound (generally a closing tape is removed) and is arranged at the splicer, as described above.

In such manner, the change of the reels of each strip of separator or electrode can take place without interrupting the production.

Document KR20200066018 discloses an electrode roll supplier including an electrode roll loading unit disposed in a frame and into which an electrode roll is loaded; a transfer unit disposed to be movable along the frame, and transferring the electrode roll loaded into the electrode roll loading unit to an electrode roll supply area.

Although the machines and the methods for changing the reels of the aforementioned type are functionally and structurally valid, the Applicant observed that these are susceptible of further improvements, in particular with regard to the production speed, the minimisation of errors and the safety of the operators.

### OBJECT AND SUMMARY OF THE INVENTION

The object of the present invention is to provide a system and a related method for replacing a reel of material for the production of electrical energy storage devices, which are highly reliable and limited in cost, and allow meeting at least some of the requirements specified above and connected to the machines of known type.

According to the invention, this object is achieved by a system for replacing a reel of material for the production of electrical energy storage devices and by a related method according to what claimed in the following independent claims and, preferably, in any one of the claims directly or indirectly dependent on the independent claims.

The claims describe preferred embodiments of the present invention forming integral part of the present description.

### BRIEF DESCRIPTION OF THE DRAWINGS

In order to better understand the present invention, some non-limiting preferred embodiments are described in the following, by mere way of example and with the aid of the accompanying drawings, wherein:

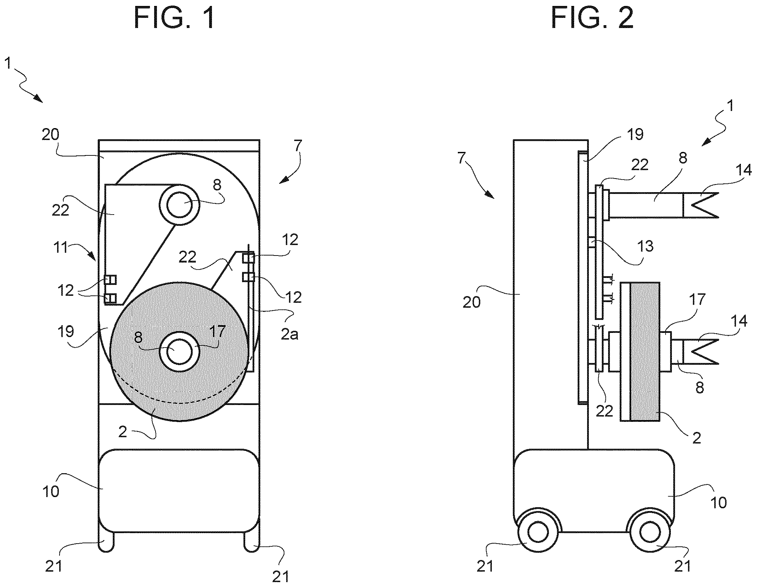

- Figure 1 is a front schematic view, with parts removed for clarity, of a system for replacing a reel of material for the production of electrical energy storage devices implemented according to the present invention;
- Figure 2 is a side view of the system of Figure 1;
- Figures 3 to 10 are schematic side views, with parts removed for clarity, of the system of Figure 1 during as many distinct and subsequent operational conditions;
- Figures 11a and 11b illustrate in front view, on an enlarged scale and with parts removed for clarity, a detail of the system of Figure 1 during two subsequent operational conditions; and
- Figure 12 is a schematic front view, with parts removed for clarity, of a system for replacing a reel of material for the production of electrical energy storage devices implemented according to an alternative embodiment.

### DETAILED DESCRIPTION

With reference to the accompanying figures, reference numeral 1 indicates, as a whole, a system for replacing a reel 2 of material for the production of electrical energy storage devices, in particular a reel 2 of a strip of electrode (cathode or anode) or separator starting from which the storage devices are produced.

In particular, the present invention is advantageously but not exclusively applied to the production of rechargeable batteries to which the following description will explicitly refer without thereby losing generality, for example planar batteries in metal can or enveloped (commonly called of the pouch type), or cylindrical batteries composed of cylindrical windings (for example of the jelly roll type).

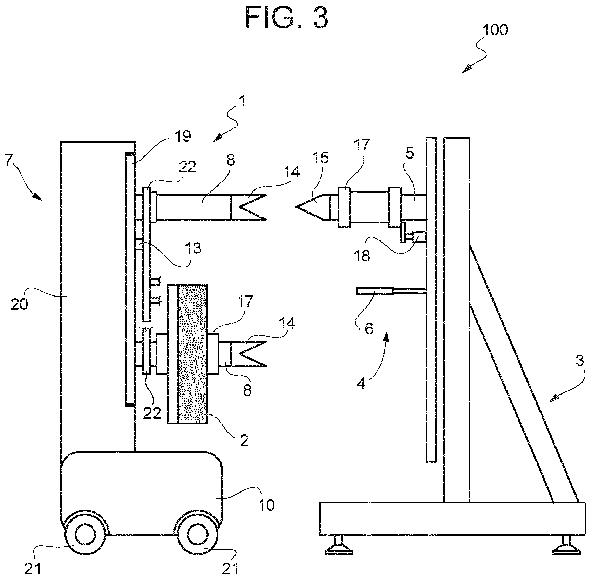

More specifically, the system 1 is adapted to be used for carrying out a reel change in a production assembly 100 of the rechargeable batteries comprising:
- the system 1 as better described in the following; and
- an automatic machine 3 (known per se, not described in detail and illustrated only in part in Figures 3 to 10) having an operative unit (not illustrated) configured to produce the rechargeable batteries (more precisely to produce cells, for example monocells, from which the actual batteries will then be obtained) starting from the strips of electrode and separator, and a feeding unit 4 (schematically illustrated) configured to feed to the operative unit placed downstream of the latter the strips initially wound in reels 2.

It is specified that, in the present description and in the appended claims, "reel change" is understood as the replacement, carried out by means of the system 1 according to the present invention, of an exhausting or exhausted reel, i.e. that has almost finished or has finished unwinding the relative strip of material, with a full reel, i.e. still containing the entire strip of material.

The feeding unit 4 comprises a plurality of support shafts or spindles 5 each adapted to receive and support a respective reel 2 in rotation for determining the unwinding of the relative strip of electrode or separator from the latter.

During the production process, the feeding unit 4 must be constantly provided with full reels 2 of strips of electrode and separator so as to ensure the continuity of the process.

The feeding unit 4 is conveniently adapted to support two reels 2 for each strip of electrode or separator. In particular, the feeding unit 4 comprises a pair of spindles 5 for each strip of material to be fed, one of which spindles 5 supports the unwinding reel 2 and the other of which spindles 5 supports a full reel 2.

In accordance with the foregoing, in order to prevent interruptions in the production, the feeding unit 4 includes a splicing device or splicer (known per se and not described in detail nor illustrated) configured to automatically join to one another the final flap of the exhausting reel 2 with the initial flap of the full reel 2, for each pair of support spindles 5 (and thus of reels 2 of a given strip of separator or electrode) .

Specifically, the splicing device comprises a receiving member having a gripper 6 adapted to grip an initial flap of the full reel 2.

Therefore, the need is felt to provide for the change of the exhausted reels 2 with full ("new") reels 2, so as to ensure the continuity of the production process.

As visible in the accompanying figures, the system 1 comprises:
- at least one vehicle 7, preferably a self-driving vehicle, for transporting the reels 2 from a storage or receiving station to a change station of the assembly 100; and
- at least one support shaft or spindle 8 carried by the vehicle 7 and configured to support one reel 2 at a time and to transfer it, at the change station, to the feeding unit 4, in particular to one of the spindles 5 of the feeding unit 4 supporting an exhausting or exhausted reel and which, therefore, requires a full reel 2.

In an embodiment, the vehicle 7 is defined by a conveyor trolley, preferably of the known type, comprising a base body 10, a plurality of wheels 21 fixed to the base body 10 and a support upright 20 fixed to the base body 10 and extending from the latter, preferably in vertical direction with respect to a resting ground of the wheels 21. In particular, the wheels 21 are rubber wheels. In other non-limiting embodiments, the vehicle 7 is configured to move on rails.

The spindle 8 is fixed to the upright 20 and extends cantilevered from the latter.

Conveniently, the vehicle 7 is provided with: sensors (known per se and not described in detail nor illustrated) configured to allow the self-driving of the vehicle 7, for example a radar o LIDAR system, a photoelectric barrier safety system, a laser system or the like; and with a control unit (not illustrated) configured to manage the data detected by the sensors and to control on the basis of these data, the trajectory of the vehicle 7 from the storage or receiving station to the change station, thus determining the self-driving thereof.

In an embodiment, the vehicle 7 is self-propelled on a driving track by means of a slide fixed to the base body 10. For example, the assembly comprises a system of rails defining the respective trajectories of the vehicle(s) 7 from the storage or receiving station to the change station.

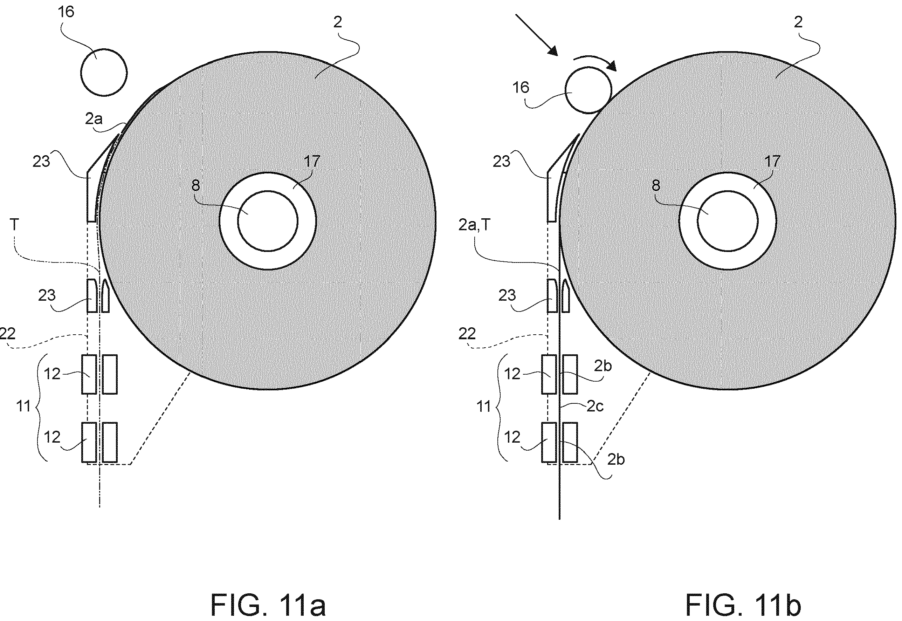

According to the invention, the system comprises a gripping member 11 carried by the vehicle 7 and comprising at least one gripper 12 configured to receive and grip an initial flap 2a of the reel 2 supported by the spindle 8 and to keep such initial flap 2a tensioned (or in tension) along an initial unwinding path T of the same (illustrated in Figures 11a and 11b).

Conveniently, the gripping member 11, and in particular the gripper 12, is arranged along the unwinding path T.

In an embodiment, the system 1 further comprises a blocking device (not illustrated), for example a brake, carried by the vehicle 7 and configured to block an angular displacement of the reel 2 about a rotation axis coaxial to the support spindle 8, in use, the reel 2, so as to keep the initial flap 2a tensioned along the unwinding path T.

It is understood that the blocking device could be defined by a stop mechanism acting on the reel 2 from the outside, for example a counter-roller acting thereon by pressure, thus blocking the unwinding of the strip of material wound in the reel 2. In such case, the architecture of the blocking device is simplified with respect to the previous case. In other non-limiting cases, the blocking device could be defined by an electric motor kept in torque and configured to move in rotation the spindle 8.

According to a further aspect of the present invention, the gripping member 11 comprises a pair of grippers 12 arranged spaced apart from one another along the unwinding path T (i.e. aligned with the unwinding path T but arranged at a non-null distance from one another) and configured to grip the initial flap 2a at spaced apart portions 2b of the latter, so that a central portion 2c of initial flap 2a between the gripped portions 2b is kept tensioned (Figure 11b).

In other words, the presence of two grippers 12 instead of only one, ensures that the central portion 2c of the initial flap 2a remains tensioned during the movement of the vehicle 7 and during the transfer of the reel 2, as it will be apparent in the following.

In such case, the aforementioned angular blocking device of the reel 2, which can be relatively complicated and expensive to manufacture, is not necessary, resulting in a simplified architecture and in a reduction in costs.

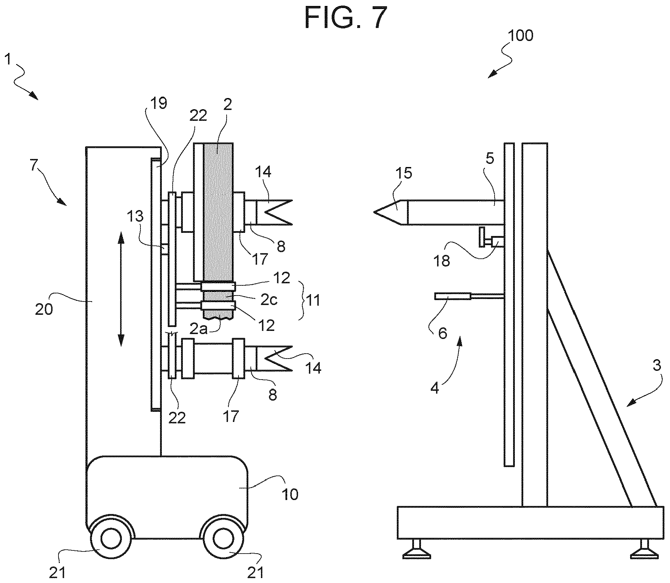

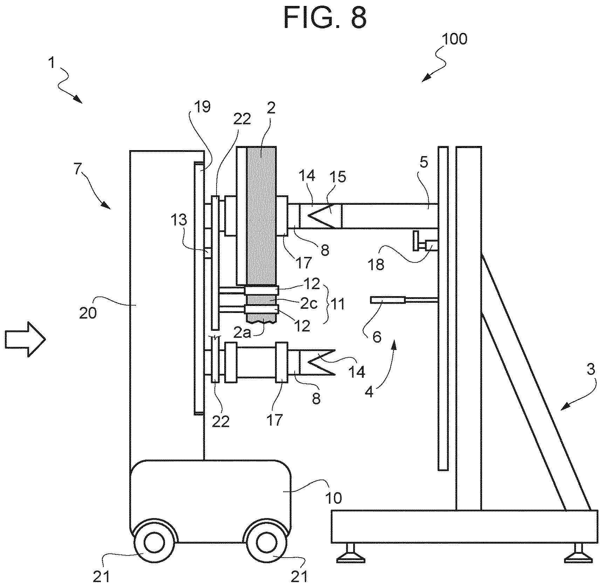

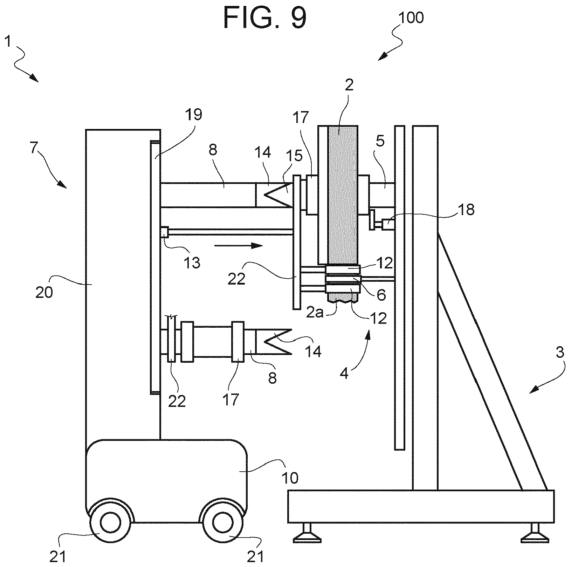

Advantageously, each gripper 12 is movable, in particular both grippers 12 are movable in a simultaneous and integral manner, between a retracted position (Figures 7 and 8) in which it grips the initial flap 2a and determines a (for example places it in) tension thereof, and an advanced position (Figure 9) in which it delivers the tensioned initial flap 2a to the feeding unit 4, and in particular to the gripper 6 of the splicing device or splicer of the same.

To such regard, the system 1 comprises a pushing device 13 configured to move each gripper 12 from the retracted position to the advanced position.

Specifically, the pushing device 13 is also configured to move the reel 2 from the support spindle 8 of the vehicle 7 to the support spindle 5 of the feeding unit 4 which needs to receive the full reel 2.

More precisely, the spindle 8 is configured to operatively couple to the spindle 5 of the feeding unit 4 which needs to receive the full reel 2 when the vehicle 7 is at the change station.

In an embodiment, the pushing device 13 is defined by a push bar controlled by an electric actuator, for example a linear or rotary motor with endless life, or a pneumatic actuator.

More specifically, such push bar is operatively connected to the grippers 12 and is extractable, for example by means of the aforementioned electric actuator, from the upright 20 for moving the grippers 12.

In an alternative embodiment, the pushing device 13 is defined by a spring pin.

In an alternative embodiment, the pushing device 13 is defined by the spindle 8 in telescopic configuration for extending towards the feeding unit 4 or for returning towards the upright 20.

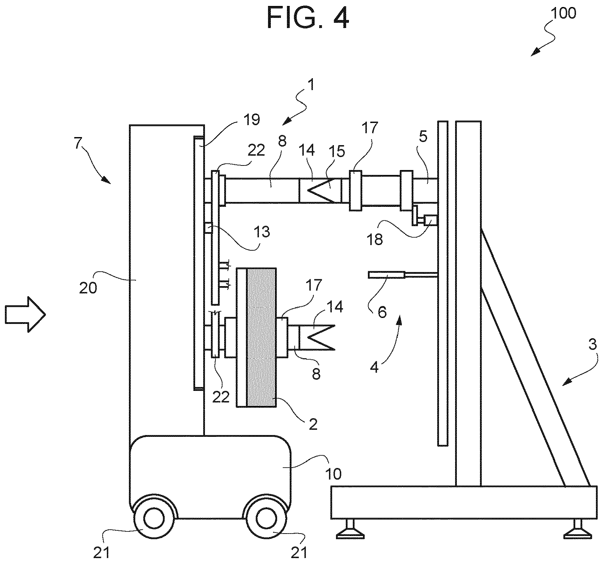

Preferably, the spindle 8 comprises a shaped terminal 14 configured to couple to the spindle 5 of the feeding unit 4 by means of a shape coupling (Figures 4, 5, 8 and 9).

More in particular, the spindle 5 comprises a relative terminal 15 shaped complementarily to the terminal 14 for obtaining the aforementioned shape coupling.

In such manner, the change of the reel 2, i.e. its transfer from the spindle 8 to the spindle 5 by means of the pushing device 13 takes place in a safe manner and only when the coupling to one another has actually taken place.

In the described example, the terminal 14 has a conical cavity, whereas the terminal 15 has a conical shape complementary to the cavity.

The aforementioned conical shape is particularly advantageous since it defines an invitation to the coupling of the terminal 15 in the terminal 14 which minimises and eliminates a possible misalignment of the spindles 5 and 8.

Preferably, each reel 2 is wound about a conveniently rigid core 17.

In practice, each core 17 is defined by a cylindrical hollow body thus defining a hub of the relative reel 2 adapted to be engaged by the spindle 8 and/or by a spindle 5.

Conveniently, the grippers 12 are carried by (fixed to) a separator 22 slidingly mounted on the spindle 8 (see to such regard Figures 8 and 9) and operatively coupled to the pushing device 13.

The separator 22 is also operatively connectable to the core 17 of each full reel 2 supported by the spindle 8, for determining the push of the core 17 actuated by the pushing device 13.

In practice, the pushing device 13 moves the core 17 by means of the separator 22.

In the light of the foregoing, the pushing device 13 is configured to:
- move each supported reel 2 from the spindle 8 to the spindle 5 of the feeding unit 4, when the spindle 8 is coupled to the spindle 5; and, simultaneously
- move the grippers 12 from the retracted position to the advanced position integrally with the reel 2.

Advantageously the grippers 12, by gripping the portions 2b of the initial flap 2a, determine the tensioning of the central portion 2c of the latter and cause such central portion 2c to be kept tensioned at least during the movement of the grippers 12 from the retracted position to the advanced position, in particular until the grippers 12 release the initial flap 2a.

More in particular, the grippers 12 are configured to receive between them, in the advanced position, the gripper 6 of the splicing device of the feeding unit 4 for delivering the tensioned central portion 2c of the initial flap 2a to such gripper 6.

Thanks to the above-described configuration, the reel 2 is transferred from the vehicle 7 to the feeding unit 4 (i.e. the reel 2 change is carried out) so that the splicing device can receive and grip the initial flap 2a conveniently tensioned in a nominal manner automatically and without the need of the intervention of any operator.

This results in an increase in the production speed, in a minimisation of errors possibly made by the operator and in a reduction in the risk of accidents of the latter and, therefore, in an improvement of the safety conditions of the assembly 100.

Advantageously, the system 1 also comprises an unwinding device 16 configured to separate the initial flap 2a from the reel 2 supported by the spindle 8 and to unwind it along the unwinding path T for feeding it to the gripping member 11.

According to a non-limiting embodiment illustrated in Figures 11a and 11b, the unwinding device comprises a counter-roller 16 associated with the spindle 8 and movable (in particular controllable by means of the aforementioned control unit) between an open configuration (Figure 11a), in which it is spaced apart from the spindle 8 and from the reel 2 supported, in use, by the latter, and a closed configuration (Figure 11b) in which it is contact-pressed (pushed) against such reel 2.

Furthermore, the counter-roller 16 is actuatable in rotation (Figure 11b) for determining a rotation of the reel 2 about the spindle 8 and causing the separation of the initial flap 2a from the reel 2 and the unwinding of the initial flap 2a along the unwinding path T towards the gripping member 11, i.e. towards the grippers 12.

Alternatively or additionally, the unwinding device comprises an electric motor configured to control the rotation of the spindle 8.

In some non-limiting cases, the unwinding device comprises an opening element, configured to cut or remove an adhesive tape which constrains the flap 2a to the rest of the reel 2.

Conveniently, the system 1 further comprises a series of deviating members 23 preferably carried by the separator 22 and configured to guide the initial flap 2a unwinding along the path T.

Thanks to such configuration, the need for the intervention of the operator is further reduced, who only has to limit himself/herself to loading the reel 2 on the spindle 8. In this manner, the production speed within the assembly 100 is increased and the risk of errors and accidents is reduced, all in a simple and cost-effective manner.

In an embodiment, also the withdrawing of the reel 2 from the storage or receiving station of the assembly 100 takes place in an automated manner, in particular, the storage station comprises automatic warehouses.

According to some non-limiting embodiments, the storage or receiving station is arranged at a machine upstream in the production chain of the electrical energy storage devices. In particular, the storage or receiving station corresponds to a station in which the reel 2 is completed. In these cases, therefore, the reel 2 is transported directly by a machine that winds it to one that unwinds it.

In the non-limiting example described and illustrated herein, the system 1 comprises two support spindles 8, both extending cantilevered from the upright 20. In other words, the vehicle 7 carries two support spindles 8.

More precisely, the vehicle 7 includes a rotatable plate 19 mounted in a movable manner to the upright 20 and to which the spindles 8 are fixed so as to extend cantilevered therefrom.

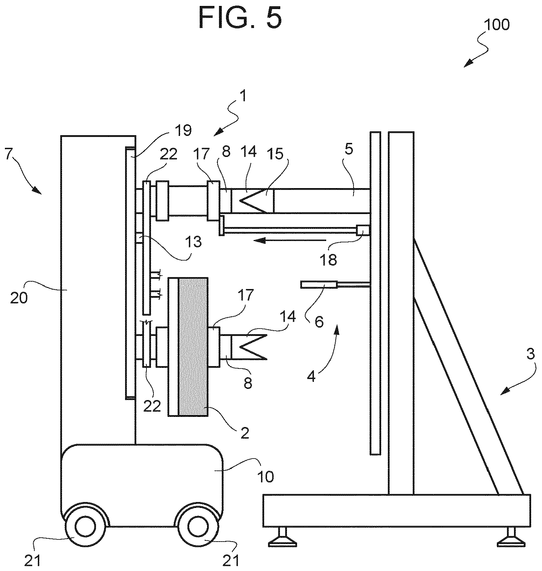

In order to carry out the reel change, the plate 19 is movable, at the change station (i.e. conveniently when the vehicle 7 is in the change station), between:
- a first position (Figures 4 and 5), in which a first spindle 8 is adapted to withdraw/receive a core 17 of an exhausted reel 2 from the feeding unit 4, i.e. from the relative spindle 5, of the machine 3 and a second spindle 8 supports a full reel 2 (to be fed to the aforementioned spindle 5 in replacement of the exhausted one); and
- a second position (Figures 7, 8 and 9), in which the second spindle 8 is adapted to transfer the full reel 2 to the feeding unit 4, i.e. to the spindle 5, and the first spindle 8 supports the core 17 of the exhausted reel 2, previously received from the spindle 5.

In particular, the rotatable plate 19 is fixed to the upright 20 in a rotatable manner about a rotation axis A, preferably horizontal (perpendicular to the upright 20).

Advantageously, the gripping member 11 comprises at least one gripper 12 for each spindle 8.

In particular, the gripping member 11 comprises a pair of grippers 12 for each spindle 8, which operate in accordance with what described above.

The operation of the system 1 of reel change implemented according to the present invention will be described in the following, with particular reference to Figures 3 to 10 and to an initial condition in which the vehicle 7 has withdrawn a full reel 2 to be fed to the feeding unit 4 for carrying out a reel change. In particular, one of the two spindles 8 carries the full reel 2 whereas the other one is free (empty) while waiting to receive the core 17 of the exhausted reel 2.

In such condition, the control unit controls, on the basis of the data received from the sensors, the movement of the vehicle 7 along the pre-established trajectory from the storage or receiving station to the change station (Figure 3).

Once such position has been reached, the vehicle 7 advances for determining the coupling of the empty spindle 8 to the spindle 5 of the feeding unit 4 which supports the core 17 of the exhausted reel 2 to be changed (Figure 4). Conveniently, the feeding unit 4 includes a pushing device 18, preferably one for each spindle 5 and substantially of the same type of the pushing device 13, configured to move the core 17 supported by the spindle 5 towards the spindle 8 (shape) coupled to the latter (Figure 5).

In some non-limiting cases not illustrated, the pushing device 18 is instead supported by the vehicle 7. In such manner, this prevents modifying to such regard the feeding unit 4.

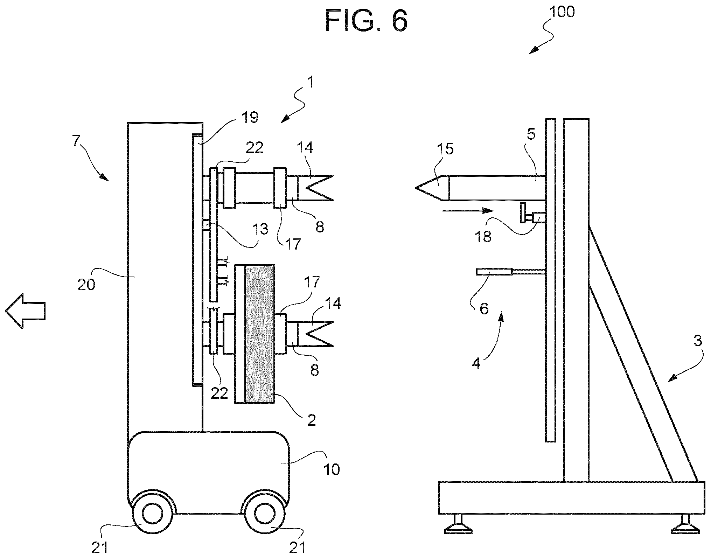

Once the movement of the core 17 has been carried out, the vehicle 7 spaces apart from the feeding unit 4 for decoupling the spindle 8 from the spindle 5 (Figure 6), thus the control unit controls the rotation of the rotatable plate 19, so that the spindle 8 supporting the full reel 2 takes the place of the spindle 8 supporting the core 17 of the exhausted reel 2 and faces the spindle 5 (Figure 7). Contextually or previously, for example, the counter-roller 16 determines the separation and unwinding of the initial flap 2a along the unwinding path T and the relative grippers 12 grip the initial flap 2a (Figure 7). In such condition, the initial flap 2a is tensioned, more in particular the central portion 2c is tensioned, still more in particular, such portion is kept tensioned until the grippers 12 deliver the flap 2a to the gripper 6 of the splicing device.

At this point, the vehicle 7 is controlled for moving close again to the feeding unit 4, so as to determine the coupling of the spindle 8 supporting the full reel 2 to the spindle 5 (Figure 8). The central portion 2c is always kept tensioned.

Then, the pushing device 13 is actuated and the core 17 of the full reel 2 (and therefore the latter) is thus transferred from the spindle 8 to the spindle 5. Contextually, the grippers 12 are moved from the retracted position to the extracted position (Figure 9).

In such position, the gripper 6 of the splicing device is received between the two grippers 12 and grips the initial flap 2a at the central portion 2c, which, as specified above, is kept tensioned during such operation.

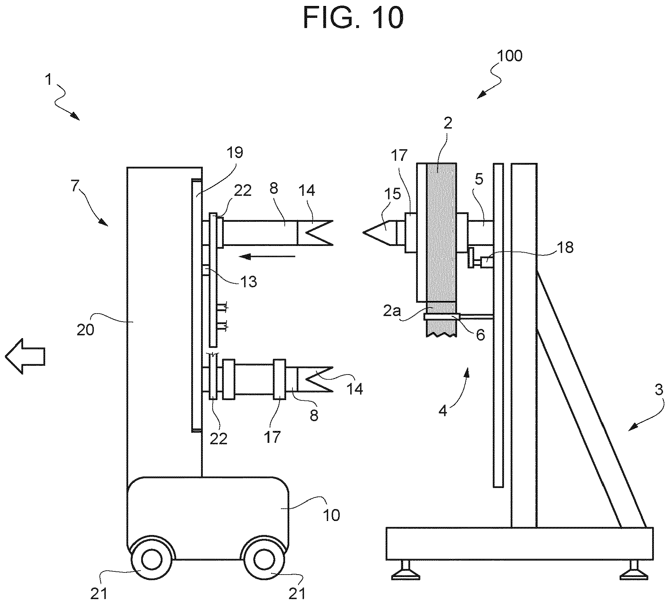

The delivery of the full reel 2 is at this point accomplished, as well as the delivery of the initial flap 2a to the splicing device. The vehicle 7 can thus be decoupled from the feeding unit 4 (Figure 10).

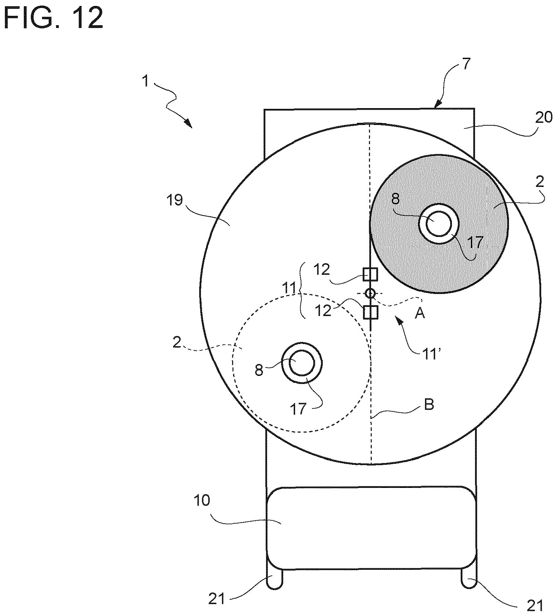

Figure 12 shows an alternative embodiment of the present invention.

According to such embodiment, the system 1 comprises the two spindles 8, the rotatable plate 19 and a gripping member 11' which differs from the gripping member 11 described above only with regard to the following, it being understood that, with the exception of what expressly indicated, the structure and operation of the system 1 are identical to those described in the foregoing.

In particular, the gripping member 11' exactly comprises two grippers 12 (and not four as in the previous case) selectively associable with the first spindle 8 or with the second spindle 8 for gripping the initial flap 2a at the portions 2b spaced apart along the unwinding path T for keeping the central portion 2c tensioned. Advantageously, the two grippers 12 are arranged (in particular mounted) on the rotatable plate 19 spaced apart from one another and aligned along a straight line B lying on the plate 19, orthogonal to the rotation axis A and intersecting the rotation axis A, and the unwinding path T extends along the straight line B (Figure 12) .

Preferably, the rotatable plate 19 has a circular shape and the straight line B defines a diameter of the rotatable plate 19. The two spindles 8 are arranged on opposite sides of the straight line B and the grippers 12 are arranged along the diameter of the plate 19, thus intersecting the rotation centre (rotation axis A) of the plate 19.

In an alternative embodiment, the plate 19 has a whatsoever different shape (rectangular, oval, triangular, etc...), but the straight line B is always arranged so as to lie on the plate 19, intersecting the rotation axis A and orthogonal to the latter.

Furthermore, the spindles 8 are arranged at the same distance from the straight line B, thus defining an antisymmetric configuration with respect to the straight line B.

Thanks to such configuration, it is possible to grip the initial flap 2a in two spaced apart points (the portions 2b), thus ensuring the tensioning of the central portion 2c, and at the same time limiting the total number of components (two grippers 12 instead of 4) and, therefore, simplifying the architecture and reducing the total costs.

In the light of the foregoing, it is clear that the system 1 allows implementing a method for replacing a reel 2 of material for the production of electrical energy storage devices, the method comprising the steps of:
- transporting the reel 2 from a storage or receiving station to a change station;
- unwinding the initial flap 2a of the reel 2 along the unwinding path T;

- gripping the initial flap 2a;
- tensioning the initial flap 2a so as to tension it along the unwinding path T;
- transferring, at the change station, the reel 2 to the feeding unit 4 while keeping the initial flap 2a tensioned.

Advantageously, the gripping step is carried out by means of at least one gripper 12 and the transferring step comprises moving the gripper 12 from a retracted position, in which it grips the initial flap 2a and determines a (places it in) tension thereof, to an advanced position, in which it delivers the tensioned initial flap 2a to the feeding unit 4.

Advantageously, the gripping step comprises gripping the initial flap 2a at the portions 2b spaced apart from one another along the unwinding path T and the tensioning step comprises tensioning the central portion 2c of the initial flap 2a compressed between the two gripped portions 2b.

By examining the characteristics of the system 1 and of the method provided according to the present invention, the advantages that they allow obtaining are evident.

In particular, the system 1 and the method according to the present invention allow determining an increase in the production speed within the assembly 100, a minimisation of errors possibly made by the operator and a reduction in the risk of accidents of the latter and, therefore, an improvement of the safety conditions of the assembly 100.

Furthermore, the presence of the counter-roller 16 for automatically unwinding the initial flap 2a and delivering it to the grippers 12 determines a further accentuation of the aforementioned advantages.

Finally, in the event the system 1 comprises the gripping member 11', the aforementioned advantages are achieved limiting at the same time the total number of components and, therefore, simplifying the architecture and reducing the total costs.

It is clear that modifications and variations can be made to the system 1 described and illustrated herein without thereby departing from the scope of protection defined by the claims.

## Claims

1. System (1) for replacing a reel (2) of material for the production of electrical energy storage devices, the system (1) comprising:
- a vehicle (7), preferably a self-driving vehicle, for transporting a reel (2) from a storage or receiving station to a change station;
the system (1) being **characterized by** further comprising:
- at least one support shaft or spindle (8) carried by the vehicle (7) and configured to support the reel (2) and to transfer it, at the change station, to a feeding unit (4) of an automatic machine (3) for the production of the electrical energy storage devices; and
- a gripping member (11; 11') carried by the vehicle (7) and comprising at least one gripper (12) configured to receive and grip an initial flap (2a) of the reel (2) supported by the support spindle (8) and to keep such initial flap (2a) tensioned along an unwinding path (T) of the same.

2. The system as claimed in claim 1, and comprising a blocking device carried by the vehicle (7) and configured to block an angular displacement of the reel (2) supported by the support spindle (8), so as to keep the initial flap (2a) tensioned along the unwinding path (T).

3. The system as claimed in claim 1 or 2, wherein the gripper (12) is movable between a retracted position, in which it grips said initial flap (2a) and determines a tension thereof, and an advanced position, to deliver the tensioned initial flap (2a) to the feeding unit (4).

4. The system as claimed in claim 3, wherein the support spindle (8) is configured to operatively couple to the feeding unit (4) when the vehicle (7) is at the change station;
wherein the system (1) comprises a pushing device (13) for moving the reel (2) from the support spindle (8) to the feeding unit (4) when the support spindle (8) is operatively coupled to the feeding unit (4);
and wherein the pushing device (13) is configured to move the gripper (12) from the retracted position to the advanced position integrally with the reel (2).

5. The system as claimed in claim 3 or 4, wherein the gripping member (11; 11') comprises a pair of said grippers (12) arranged spaced apart from one another along said unwinding path (T) of the initial flap (2a) and configured to grip the initial flap (2a) at two spaced apart portions (2b) thereof, so that a central portion (2c) of the initial flap (2a) between the two gripped portions (2b) is kept tensioned at least during the movement of the grippers (12) from the retracted position to the advanced position.

6. The system as claimed in claim 5, wherein the two grippers (12) are configured to receive between them, in the advanced position, a retaining member (6) of the feeding unit (4) to deliver to the retaining member (6) said tensioned central portion (2c) of the initial flap (2a).

7. The system as claimed in any one of the preceding claims, and comprising an unwinding device (16) configured to separate the initial flap (2a) from the reel and to unwind it along the unwinding path (T) for feeding it to the gripping member (11; 11').

8. The system as claimed in claim 7, wherein the unwinding device comprises a counter-roller (16) associated with the support spindle (8) and movable between an open configuration, in which it is spaced apart from said spindle (8) and from the reel (2) supported, in use, by the latter, and a closed configuration in which it is contact-pressed against such reel (2) ;
and wherein the counter-roller (16) is actuatable in rotation to determine a rotation of the reel (2) about the support spindle (8) and cause the separation of the initial flap (2a) from the reel (2) and the unwinding of the initial flap (2a) along the unwinding path (T) towards the gripping member (11; 11').

9. The system as claimed in any one of the preceding claims, and comprising two support spindles (8) mounted on a rotatable plate (19) carried by the vehicle (7) and movable, at the change station, between a first position, in which a first spindle (8) is configured to withdraw/receive a core (17) of an exhausted reel (2) from the feeding unit (4) of the automatic machine (3) and a second spindle (8) supports a full reel (2), and a second position, in which the second spindle (8) is configured to transfer the full reel (2) to the feeding unit (4) and the first spindle (8) supports the core (17) of the exhausted reel (2);
wherein the gripping member (11; 11') comprises at least one gripper (12) for each support spindle (8).

10. The system as claimed in claim 9, wherein the gripping member (11') comprises two grippers (12) selectively associable with the first spindle (8) or with the second spindle (8) to grip said initial flap (2a) at portions (2b) thereof spaced apart from one another along the unwinding path (T) and so as to keep tensioned a central portion (2c) of the initial flap (2a) between the two gripped portions (2b);
wherein the plate (19) is mounted to the vehicle (7) rotatably about a rotation axis (A);
and wherein the two grippers (12) are arranged on the rotatable plate (19) spaced apart from one another and aligned along a straight line (B) lying on the plate (19), orthogonal to the rotation axis (A) and intersecting the rotation axis (A), the unwinding path (T) extending along said straight line (B) .

11. The system as claimed in any one of the preceding claims, wherein the support spindle (8) comprises a terminal (14) configured to couple with a receiving spindle (5) of the feeding unit (4) by means of a shape coupling.

12. Assembly (100) for the production of electrical energy storage devices comprising:
- an automatic machine (3) having an operative unit configured to produce the storage devices starting from strips of electrode and separator and a feeding unit (4) configured to feed to the operative unit said strips initially wound in respective reels (2); and
- a system (1) for changing, within the feeding unit (4), an exhausted reel (2) with a full reel (2) as claimed in any one of the preceding claims;
wherein the feeding unit (4) comprises a splicing device configured to join a final flap of an exhausting reel (2) with said initial flap (2a) of a full reel (2) and including a retaining member (6) for receiving the initial flap (2a) from the gripping member (11; 11');
and wherein the gripping member (11; 11') is configured to feed said tensioned initial flap (2a) to the retaining member (6) of the splicing device.

13. Method for replacing a reel (2) of material for the production of electrical energy storage devices, the method comprising the steps of:
- transporting a reel (2) from a storage or receiving station to a change station;
- unwinding an initial flap (2a) of said reel (2) along an unwinding path (T);
- gripping said initial flap (2a);
- tensioning said initial flap (2a) so as to tension it along the unwinding path (T);
- transferring, at the change station, the reel (2) to a feeding unit (4) of an automatic machine (3) for the production of the storage devices while keeping the initial flap (2a) tensioned.

14. Method as claimed in claim 13, wherein the gripping step is carried out by means of at least one gripper (12);
and wherein the transferring step comprises moving the gripper (12) from a retracted position, in which it grips said initial flap (2a) and determines its tension, to an advanced position, in which it delivers the tensioned initial flap (2a) to the feeding unit (4).

15. Method as claimed in claim 13 or 14, wherein the gripping step comprises gripping the initial flap (2a) at portions (2b) thereof spaced apart from one another along the unwinding path (T);
and wherein the tensioning step comprises tensioning a central portion (2c) of the initial flap (2a) between the two gripped portions (2b).

## Patentansprüche

1. System (1) zum Auswechseln einer Materialspule (2) für die Herstellung von elektrischen Energiespeichern, wobei das System (1) aufweist:
- ein Fahrzeug (7), vorzugsweise ein selbstfahrendes Fahrzeug, zum Transportieren einer Spule (2) von einer Lager- oder Empfangsstation zu einer Wechselstation;
wobei das System (1) **dadurch gekennzeichnet ist, dass** es weiterhin aufweist:
- mindestens eine Halteachse oder -spindel (8), die von dem Fahrzeug (7) gehalten wird und ausgebildet ist, um die Spule (2) zu halten und sie an der Wechselstation an eine Zuführeinheit (4) einer automatischen Maschine (3) für die Herstellung der elektrischen Energiespeicher zu übergeben; und
- ein Greifelement (11; 11'), das von dem Fahrzeug (7) gehalten wird und mindestens einen Greifer (12) aufweist, der ausgebildet ist, um eine Anfangslasche (2a) der von der Haltespindel (8) gehaltenen Spule (2) zu empfangen und zu ergreifen und diese Anfangslasche (2a) entlang eines Abwickelweges (T) derselben gespannt zu halten.

2. Das System nach Anspruch 1 und aufweisend eine Blockiervorrichtung, die von dem Fahrzeug (7) getragen wird und ausgebildet ist, um eine Winkelverstellung der von der Haltespindel (8) getragenen Spule (2) zu blockieren, um die Anfangslasche (2a) entlang des Abwickelweges (T) gespannt zu halten.

3. Das System nach Anspruch 1 oder 2, wobei der Greifer (12) zwischen einer zurückgezogenen Position, in der er die Anfangslasche (2a) ergreift und deren Spannung bestimmt, und einer vorgeschobenen Position beweglich ist, um die gespannte Anfangslasche (2a) an die Zuführeinheit (4) zu liefern.

4. Das System nach Anspruch 3, wobei die Haltespindel (8) ausgebildet ist, um mit der Zuführeinheit (4) zu kuppeln, wenn sich das Fahrzeug (7) an der Wechselstation befindet;
wobei das System (1) eine Drückvorrichtung (13) aufweist, um die Spule (2) von der Haltespindel (8) zu der Zuführeinheit (4) zu bewegen, wenn die Haltespindel (8) operativ mit der Zuführeinheit (4) gekoppelt ist;
wobei die Drückvorrichtung (13) ausgebildet ist, um den Greifer (12) aus der zurückgezogenen Position in die vorgeschobene Position zu bewegen, die mit der Rolle (2) verbunden ist.

5. Das System nach Anspruch 3 oder 4, wobei das Greifelement (11; 11') ein Paar der genannten Greifer aufweist
(12) umfasst, die entlang des Abwickelweges (T) der Anfangslasche (2a) zueinander beabstandet angeordnet und so ausgebildet sind, dass sie die Anfangslasche (2a) an zwei zueinander beabstandeten Abschnitten (2b) derselben ergreifen, so dass ein mittlerer Abschnitt (2c) der Anfangslasche (2a) zwischen den beiden ergriffenen Abschnitten (2b) zumindest während der Bewegung der Greifer (12) von der zurückgezogenen Position in die vorgeschobene Position unter Spannung gehalten wird.

6. Das System nach Anspruch 5, wobei die beiden Greifer (12) ausgebildet sind, um in der vorgeschobenen Position ein Halteelement (6) der Zuführeinheit (4) zwischen sich zu empfangen, um dem Halteelement (6) den gespannten Mittelteil (2c) der Anfangslasche (2 a) zuzuführen.

7. Das System nach einem der vorangehenden Ansprüche, das eine Abwickelvorrichtung (16) aufweist, die ausgebildet ist, um die Anfangslasche (2a) von der Rolle zu trennen und sie entlang des Abwickelweges (T) abzuwickeln, um sie dem Greifelement (11; 11') zuzuführen.

8. Das System nach Anspruch 7, wobei die Abwickelvorrichtung eine Gegenrolle (16) aufweist, die mit der Haltemittelfläche (8) verbunden ist und zwischen einer offenen Konfiguration, in der sie von der Haltemittelfläche (8) und von der Rolle (2), die im Gebrauch von letzterer gehalten wird, beabstandet ist, und einer geschlossenen Konfiguration, in der sie gegen die Rolle (2) gedrückt wird, beweglich ist;
und wobei die Gegenrolle (16) drehbar ist, um eine Drehung der Spule (2) um das Haltemittel (8) zu erreichen und die Trennung der Anfangslasche (2a) von der Spule (2) und das Abwickeln der Anfangslasche (2a) Klappe (2a) entlang des Abwickelweges (T) zum Greifelement (11; 11') zu erreichen.

9. Das System nach einem der vorangehenden Ansprüche, das zwei Haltemittel (8) aufweist, die auf einer drehbaren Platte (19) montiert sind, die von dem Fahrzeug (7) getragen wird und an der Wechselstation zwischen einer ersten Position beweglich ist, in der eine erste Spindel (8) ausgebildet ist, um ein Haltemittel (17) einer verbrauchten Rolle (2) aus der Zuführeinheit (4) der automatischen Maschine (3) zu entnehmen/zu empfangen, und eine zweite Spindel (8) ein gefülltes Haltemittel (2) trägt, und einer zweiten Position, in der die zweite Spindel (8) ausgebildet ist, um das gefüllte Haltemittel (2) an die Zuführeinheit (4) zu übergeben, und die erste Spindel (8) das Haltemittel (17) der verbrauchten Rolle (2) trägt;
wobei das Greifelement (11; 11') mindestens einen Greifer (12) für jedes Haltemittel (8) aufweist.

10. Das System nach Anspruch 9, wobei das Greifelement (11') zwei Greifer (12) aufweist, die selektiv zuordenbar sind
mit der ersten Spindel (8) oder mit der zweiten Spindel (8), um die Anfangslasche (2a) an Abschnitten (2b) derselben zu ergreifen, die entlang des Abwickelweges (T) voneinander beabstandet sind, und um einen mittleren Abschnitt (2 c) der Anfangslasche (2a) zwischen den beiden ergriffenen Abschnitten (2b) gespannt zu halten;
wobei die Platte (19) an dem Fahrzeug (7) drehbar um eine Drehachse (A) montiert ist; und wobei die beiden Greifer (12) auf der drehbaren Platte (19) voneinander beabstandet und entlang einer auf der Platte (19) liegenden, orthogonal zur Drehachse (A) verlaufenden und die Drehachse (A) schneidenden Geraden (B) miteinander gefluchtet sind, wobei sich der Abwickelweg (T) entlang dieser Geraden (B) erstreckt.

11. Das System nach einem der vorangehenden Ansprüche, wobei die Haltespindel (8) einen Anschluss (14) aufweist, der ausgebildet ist, um mit einer Empfangsspindel (5) der Zuführeinheit (4) mittels einer Formkopplung zu koppeln.

12. Baugruppe (100) für die Herstellung von elektrischen Energiespeichern aufweisend:
- eine automatische Maschine (3) mit einer operativen Einheit
die ausgebildet ist, um die Speichervorrichtungen ausgehend von Elektroden- und Separatorstreifen herzustellen, und eine Zuführeinheit (4), die ausgebildet ist, um der operativen Einheit die Streifen zuzuführen, die ursprünglich auf entsprechende Spulen (2) aufgewickelt waren; und
- ein System (1) zum Auswechseln einer leeren Spule (2) gegen ein gefülltes Haltemittel (2) innerhalb der Zuführeinheit (4) nach einem der vorangehenden Ansprüche;
wobei die Zuführeinheit (4) eine Spleißvorrichtung aufweist, die ausgebildet ist, um eine Endlasche einer leeren Spule (2) mit der Anfangslasche (2a) einer gefüllten Spule (2) zu verbinden, und die ein Halteelement (6) zum Empfangen der Anfangslasche (2a) von dem Greifelement (11; 11') aufweist;
und wobei das Greifelement (11; 11') ausgebildet ist, um die gespannte Anfangslasche (2a) dem Halteelement
(6) der Spleißvorrichtung zuzuführen.

13. Verfahren zum Auswechseln einer Materialspule (2) für die Herstellung von elektrischen Energiespeichern, wobei das Verfahren die folgenden Schritte umfasst:
- Transportieren einer Spule (2) von einer Lager- oder Empfangsstation zu einer Wechselstation;
- Abwickeln einer Anfangslasche (2a) der Spule (2) entlang eines Abwickelweges (T);
- Greifen der Anfangslasche (2a);
- Spannen der Anfangslasche (2a), um sie entlang des Abwickelweges (T) zu spannen;
- Übergabe der Rolle (2) an der Wechselstation an eine Zuführeinheit (4) einer automatischen Maschine (3) für die Herstellung der Speichervorrichtungen, wobei die Anfangslasche (2a) gespannt bleibt.

14. Verfahren nach Anspruch 13, wobei der Schritt des Greifens mittels mindestens eines Greifers (12) durchgeführt wird;
wobei der Übergabeschritt das Bewegen des Greifers (12) aus einer zurückgezogenen Position, in der er die Anfangslasche (2a) ergreift und ihre Spannung bestimmt, in eine vorgeschobene Position aufweist, in der er die gespannte Anfangslasche (2a) an die Zuführeinheit (4) liefert.

15. Verfahren nach Anspruch 13 oder 14, wobei der Greifschritt ein Greifen der Anfangslasche (2a) an Abschnitten (2b) aufweist, die entlang des Abwickelweges (T) voneinander beabstandet sind;
wobei der Schritt des Spannens das Spannen eines mittleren Teils (2c) der Anfangslasche (2a) zwischen den beiden ergriffenen Teilen (2b) aufweist.

## Revendications

1. Système (1) pour remplacer une bobine (2) de matériau pour la fabrication de dispositifs de stockage d'énergie électrique, le système (1) comprenant :
- un véhicule (7), de préférence un véhicule à conduite autonome, pour transporter une bobine (2) d'une station de stockage ou de réception à une station de changement ;
- le système (1) étant **caractérisé en ce qu'**il comprend en outre :
au moins un arbre ou broche de support (8) porté(e) par le véhicule (7) et configuré(e) pour supporter la bobine (2) et pour la transférer, au niveau de la station de changement, à une unité d'alimentation (4) d'une machine automatique (3) pour la fabrication des dispositifs de stockage d'énergie électrique ; et
- un élément de préhension (11 ; 11') porté par le véhicule (7) et comprenant au moins une pince (12) configurée pour recevoir et saisir un rabat initial (2a) de la bobine (2) supportée par la broche de support (8) et pour maintenir un tel rabat initial (2a) tendu le long d'une trajectoire de déroulement (T) de cette dernière.

2. Système selon la revendication 1, et comprenant un dispositif de blocage porté par le véhicule (7) et configuré pour empêcher un déplacement angulaire de la bobine (2) supportée par la broche de support (8), afin de maintenir le rabat initial (2a) tendu le long de la trajectoire de déroulement (T).

3. Système selon la revendication 1 ou 2, dans lequel la pince (12) est mobile entre une position rétractée, dans laquelle elle pince ledit rabat initial (2a) et détermine sa tension, et une position avancée, pour amener le rabat initial (2a) tendu à l'unité d'alimentation (4).

4. Système selon la revendication 3, dans lequel la broche de support (8) est configurée pour se coupler, de manière opérationnelle, à l'unité d'alimentation (4), lorsque le véhicule (7) est dans la station de changement ;
dans lequel le système (1) comprend un dispositif de poussée (13) pour déplacer la bobine (2) de la broche de support (8) à l'unité d'alimentation (4), lorsque la broche de support (8) est couplée, de manière opérationnelle, à l'unité d'alimentation (4) ;
et dans lequel le dispositif de poussée (13) est configuré pour déplacer la pince (12) de la position rétractée à la position avancée, de manière solidaire avec la bobine (2).

5. Système selon la revendication 3 ou 4, dans lequel l'élément de préhension (11 ; 11') comprend une paire desdites pinces (12) agencées à distance l'une de l'autre le long de ladite trajectoire de déroulement (T) du rabat initial (2a) et configurées pour saisir le rabat initial (2a) au niveau de ses deux parties (2b) espacées, de sorte qu'une partie centrale (2c) du rabat initial (2a) entre les deux parties (2b) saisies, est maintenue tendue au moins pendant le déplacement des pinces (12) de la position rétractée à la position avancée.

6. Système selon la revendication 5, dans lequel les deux pinces (12) sont configurées pour recevoir, entre elles, dans la position avancée, un élément de retenue (6) de l'unité d'alimentation (4) pour amener à l'élément de retenue (6), ladite partie centrale (2c) tendue du rabat initial (2a).

7. Système selon l'une quelconque des revendications précédentes, et comprenant un dispositif de déroulement (16) configuré pour séparer le rabat initial (2a) de la bobine et pour le dérouler le long de la trajectoire de déroulement (T) afin de l'amener à l'élément de préhension (11 ; 11').

8. Système selon la revendication 7, dans lequel le dispositif de déroulement comprend un rouleau antagoniste (16) associé à la broche de support (8) et mobile entre une configuration ouverte, dans laquelle il est espacé de ladite broche (8) et de la bobine (2) supportée, à l'usage, par cette dernière, et une configuration fermée dans laquelle il est comprimé à contact contre une telle bobine (2) ;
et dans lequel le rouleau antagoniste (16) peut être actionné en rotation afin de déterminer une rotation de la bobine (2) autour de la broche de support (8) et provoque la séparation du rabat initial (2a) de la bobine (2) et le déroulement du rabat initial (2a) le long de la trajectoire de déroulement (T) vers l'élément de préhension (11 ; 11').

9. Système selon l'une quelconque des revendications précédentes, et comprenant deux broches de support (8) montées sur une plaque rotative (19) portée par le véhicule (7) et mobiles, au niveau de la station de changement, entre une première position, dans laquelle une première broche (8) est configurée pour retirer/recevoir une âme (17) d'une bobine (2) épuisée de l'unité d'alimentation (4) de la machine automatique (3) et une deuxième broche (8) supporte une bobine (2) pleine, et une deuxième position, dans laquelle la deuxième broche (8) est configurée pour transférer la bobine (2) pleine à l'unité d'alimentation (4) et la première broche (8) supporte l'âme (17) de la bobine (2) épuisée ;
dans lequel l'élément de préhension (11 ; 11') comprend au moins une pince (12) pour chaque broche de support (8).

10. Système selon la revendication 9, dans lequel l'élément de préhension (11') comprend deux pinces (12) pouvant être sélectivement associées à la première broche (8) ou à la deuxième broche (8) pour saisir ledit rabat initial (2a) au niveau de ses parties (2b) espacées l'une de l'autre le long de la trajectoire de déroulement (T) et afin de maintenir une partie centrale (2c) du rabat initial (2a) tendue entre les deux parties (2b) saisies ;
dans lequel la plaque (19) est montée sur le véhicule (7) de manière rotative autour d'un axe de rotation (A) ;
et dans lequel les deux pinces (12) sont agencées sur la plaque rotative (19), espacées l'une de l'autre et alignées le long d'une ligne droite (B) se trouvant sur la plaque (19) orthogonale à l'axe de rotation (A) et coupant l'axe de rotation (A), la trajectoire de déroulement (T) s'étendant le long de ladite ligne droite (B).

11. Système selon l'une quelconque des revendications précédentes, dans lequel la broche de support (8) comprend une borne (14) configurée pour se coupler à une broche de réception (5) de l'unité d'alimentation (4) au moyen d'un couplage de forme.

12. Ensemble (100) pour la fabrication de dispositifs de stockage d'énergie électrique comprenant :
- une machine automatique (3) ayant une unité opérationnelle configurée pour fabriquer les dispositifs de stockage à partir de bandes d'électrode et de séparateur et une unité d'alimentation (4) configurée pour amener à l'unité opérationnelle, lesdites bandes initialement enroulées dans des bobines (2) respectives ; et
- un système (1) pour changer, à l'intérieur de l'unité d'alimentation (4), une bobine (2) épuisée par une bobine (2) pleine selon l'une quelconque des revendications précédentes ;
dans lequel l'unité d'alimentation (4) comprend un dispositif d'épissage configuré pour assembler un rabat final d'une bobine (2) épuisée avec ledit rabat initial (2a) d'une bobine pleine (2) et comprenant un élément de retenue (6) pour recevoir le rabat initial (2a) de l'élément de préhension (11 ; 11') ;
et dans lequel l'élément de préhension (11 ; 11') est configuré pour amener ledit rabat initial (2a) tendu à l'élément de retenue (6) du dispositif d'épissage.

13. Procédé pour remplacer une bobine (2) de matériau pour la fabrication de dispositifs de stockage d'énergie électrique, le procédé comprenant les étapes consistant à :
- transporter une bobine (2) d'une station de stockage ou de réception à une station de changement ;
- dérouler un rabat initial (2a) de ladite bobine (2) le long d'une trajectoire de déroulement (T) ;
- saisir ledit rabat initial (2a) ;
- tendre ledit rabat initial (2a) afin de le tendre le long de la trajectoire de déroulement (T) ;
- transférer, au niveau de la station de changement, la bobine (2) vers une unité d'alimentation (4) d'une machine automatique (3) pour la fabrication des dispositifs de stockage tout en maintenant le rabat initial (2a) tendu.

14. Procédé selon la revendication 13, dans lequel l'étape de préhension est réalisée au moyen d'au moins une pince (12) ;
et dans lequel l'étape de transfert comprend l'étape consistant à déplacer la pince (12) d'une position rétractée, dans laquelle elle saisit ledit rabat initial (2a) et détermine sa tension, à une position avancée, dans laquelle elle amène le rabat initial (2a) tendu à l'unité d'alimentation (4).

15. Procédé selon la revendication 13 ou 14, dans lequel l'étape de préhension comprend l'étape consistant à saisir le rabat initial (2a) au niveau de ses parties (2b) espacées l'une de l'autre le long de la trajectoire de déroulement (T) ;
et dans lequel l'étape de tension comprend l'étape consistant à tendre une partie centrale (2c) du rabat initial (2a) entre les deux parties (2b) saisies.
